# FASCICULE DE BREVET EUROPEEN

(11) **EP 1 585 915 B1**
(45) Date de publication et mention de la délivrance du brevet: **13.12.2006**
(21) Numéro de dépôt: 04704630.5
(22) Date de dépôt: 23.01.2004
(51) Int. Cl.: F16H 63/20

(54) **DISPOSITIF DE COMMANDE INTERNE DE BOITE DE VITESSE MECANIQUE**
INTERNE STEUERVORRICHTUNG FÜR MECHANISCHES GETRIEBE
INTERNAL CONTROL DEVICE FOR MECHANICAL GEARBOX

(30) Priorité: 24.01.2003 FR 0300760
(43) Date de publication de la demande: 19.10.2005
(73) Titulaire: Renault s.a.s., 92100 Boulogne Billancourt (FR)
(72) Inventeur: MAILLARD, Jean Pierre, F-78790 Septeuil (FR); RAOUL, Michel, F-78990 Elancourt (FR)
(74) Mandataire: Rougemont, Bernard
(86) Numéro de dépôt international: PCT/FR2004/000157
(87) Numéro de publication internationale: WO 2004/068006

(56) Documents cités:
- DE-A- 10 133 695
- DE-C- 10 011 272
- FR-A- 2 802 600
- US-A- 4 060 005
- US-A- 4 307 624
- US-A- 4 430 904

## Description

La présente invention se rapporte à la commande interne des boîtes de vitesses mécaniques.

Plus précisément, cette invention concerne un dispositif de commande interne de boîte de vitesses mécanique munie d'un premier et d'un second embrayage d'entrée contrôlant respectivement la transmission du couple moteur vers un premier et un second arbre primaire concentriques portant des pignons fixes, de deux arbres secondaires portant des pignons fous entraînés par le premier et par le second arbre primaire, et de moyens de crabotage des pignons fous actionnés par un ensemble de fourchettes.

Elle trouve une application privilégiée dans une boîte de vitesses à commande automatisée ou robotisée, c'est à dire dont l'ensemble des actionneurs, de commande d'embrayage, de sélection et d'engagement des rapports est placé sous le contrôle d'un calculateur prenant en charge tout ou partie des décisions de commande à la place du conducteur.

Certaines boîtes de vitesses de véhicule automobile possèdent deux voies parallèles de flux de couple ayant des étages de démultiplication pouvant être insérés ou séparés dudit flux de couple, et entre lesquels la transmission du couple peut être réalisé continûment.

On connaît des exemples de transmissions dites "transmissions à deux embrayages", dans lesquelles deux voies parallèles de transmission peuvent être couplées indépendamment au moteur par deux embrayages respectifs. Le document FR 2 802 600, qui montre toutes les caractéristiques du préambule de la revendication 1, décrit un exemple d'une telle boîte de vitesses.

Pour assurer la continuité du flux de couple dans ce type de transmission, il faut que les deux parties de la transmission, regroupant respectivement les étages de démultiplication de rang impair et les étages de démultiplication de rang pair puissent être commutées simultanément. Si par exemple, l'étage de démultiplication du rapport de première est inséré dans une première voie de transmission de couple de la première transmission partielle, dont l'embrayage d'entrée est fermé, et si l'étage de démultiplication du rapport de deuxième est inséré dans une deuxième voie de transmission, dont l'embrayage d'entrée est ouvert, les deux embrayages sont alors actionnés simultanément pour réaliser la commutation du rapport de première au rapport de deuxième, de manière à ce que celui qui était initialement ouvert soit fermé, et inversement.

Toutefois, pour réaliser des commutations avec transmission continue du couple, il est indispensable de pouvoir réaliser indépendamment, pour chaque « voie de transmission », l'insertion ou la désinsertion d'un étage de démultiplication et l'actionnement de l'embrayage. Pour cette raison, chacune des voies de transmission dispose d'un actionneur particulier pour la sélection et l'engagement des rapports et d'un autre actionneur, dédié à l'embrayage.

L'inconvénient d'une telle disposition est la présence de deux actionneurs pour commuter les étages de démultiplication dans les deux voies de la transmission, et de deux autres actionneurs pour commuter les embrayages. La transmission correspondante est ainsi lourdement pénalisée en raison de son encombrement important et de ses coûts de fabrication élevés.

L'invention vise à limiter ces inconvénients en proposant un dispositif de commande de boîte de vitesses dans lequel l'actionnement de commutation des deux voies de la transmission est réalisé par le même actionneur, l'actionnement des embrayages pouvant être assuré par ailleurs par deux autres actionneurs indépendants:

Dans ce but, elle propose que la sélection et le passage de tous les rapports de la boîte soient assurés par un sélecteur commun composé d'un barillet de sélection et d'un chariot de passage concentrique au barillet et disposé à l'intérieur de celui-ci.

Selon un mode de réalisation préféré de l'invention, le barillet est fixe axialement et mobile en rotation, de manière à entraîner le chariot en rotation.

D'autres caractéristiques et avantages de la présente invention apparaîtront clairement à la lecture de la description détaillée qui suit pour laquelle on se reportera aux dessins annexés dans lesquels :
- la figure 1 représente schématiquement une boîte de vitesses 10 à double embrayage d'entrée dans laquelle le dispositif de commande de l'invention trouve une application non limitative,
- la figure 2 représente l'ensemble du dispositif de commande interne proposé en position de sélection du rapport de première,
- la figure 3 représente en perpective le sélecteur et les crabots repartis angulairement,
- la figure 4 montre partiellement les doigts, les zones périphériques du sélecteur et les crabots des fourchettes en représentation aplanie,
- la figure 5 représente l'ensemble du dispositif de commande interne proposé en position de sélection des rapports de deuxième et de sixième,
- la figure 6 représente l'ensemble du dispositif de commande interne proposé en position de sélection des rapports de troisième et de cinquième,
- la figure 7 représente l'ensemble du dispositif de commande interne proposé en position de sélection du rapport de quatrième, et
- la figure 8 représente l'ensemble du dispositif de commande interne proposé en position de sélection du rapport de marche arrière.

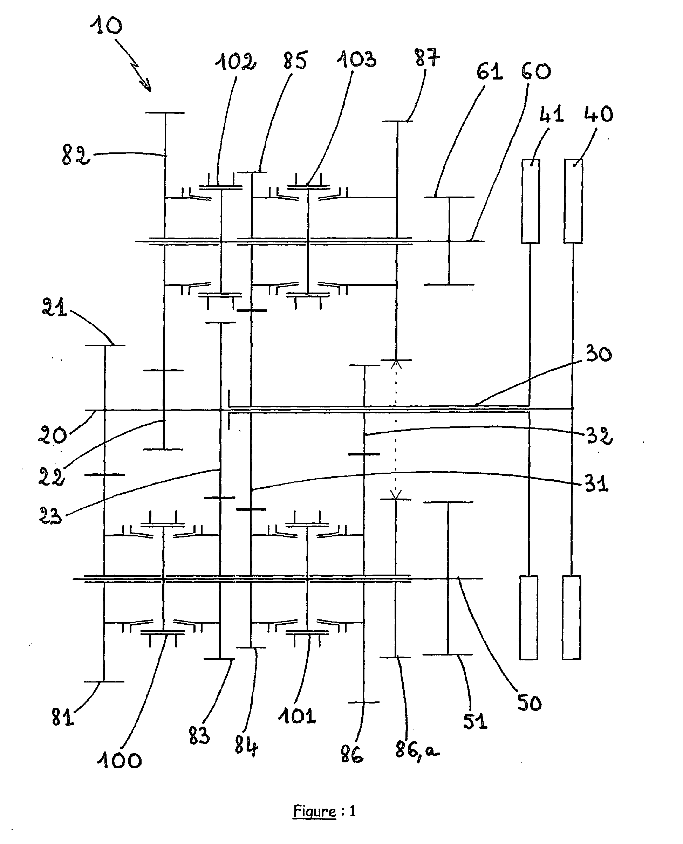

Sur la figure 1, on a représenté une structure schématique de boîte de vitesses 10 à double embrayage d'entrée de type connu, pouvant être commandée conformément à l'invention.

De manière conventionnelle, la boîte de vitesses 10 comporte un premier arbre primaire plein 20 qui est monté coaxialement à un second arbre primaire creux 30. Ces deux arbres sont montés à rotation dans un carter (non représenté) et entraînés par un moteur respectivement par l'intermédiaire d'un premier embrayage 40 et d'un second embrayage 41, qui sont par exemple, mais pas obligatoirement des embrayages monodisque secs.

La boîte de vitesses 10 comporte aussi un premier arbre secondaire 50 et un deuxième arbre secondaire 60, également montés à rotation dans le carter. Ces arbres secondaires sont agencés, aux extrémités des branches d'un « V » compris dans le plan transversal aux axes des arbres 20, 30, 50 et 60, et dont le sommet est confondu avec l'axe des arbres primaires 20 et 30.

Des engrenages sont agencés entre les arbres primaires 20 et 30 et les arbres secondaires 50 et 60, de manière à transmettre le couple du véhicule à une couronne d'un différentiel d'un pont (non représentés) entraînant les roues d'un véhicule. A cet effet, le premier arbre secondaire 50 et le second arbre secondaire 60 comportent respectivement un premier pignon d'attaque 51 et un second pignon d'attaque 61 qui engrènent tous les deux avec la couronne du différentiel (non représentée).

Les engrenages sont constitués de pignons fixes portés par les premier et second arbres primaires 20 et 30, et qui engrènent avec des pignons fous portés par les premier et second arbres secondaires 50 et 60. Les pignons fous peuvent sélectivement être liés en rotation au premier et au second arbre secondaires 50 et 60 par des moyens de crabotage indépendants pour réaliser des engrenages indépendants correspondant sélectivement à au moins deux rapports de marche avant et à un rapport de marche arrière. Les deux embrayages 40 du premier arbre primaire 20, et 41 du deuxième arbre primaire 30 peuvent par ailleurs être actionnés alternativement, en passant par un état où ils transmettent tous les deux le couple par glissement de l'un d'eux, pour permettre au moins un changement de rapport sans discontinuité de couple transmis aux roues.

Le premier arbre primaire 20 porte trois pignons fixes, de gauche à droite, 21, 22 et 23, le premier d'entre eux engrène avec un unique pignon fou 81, porté par le premier arbre secondaire 50, pour constituer le rapport de troisième, le second d'entre eux engrène également avec un seul pignon fou 82 porté par le second arbre secondaire 60 pour constituer le rapport de première. Enfin, le troisième d'entre eux engrène avec un seul pignon fou 83 porté par le premier arbre secondaire 50 pour constituer le rapport de cinquième. Le second arbre primaire creux 30 porte deux pignons fixes, de gauche à droite, 31 et 32. Le premier d'entre eux engrène avec deux pignons fous 84 et 85, respectivement portés par le premier arbre secondaire 50 pour constituer le rapport de sixième, et par le second arbre secondaire 60 pour constituer le rapport de quatrième, le second d'entre eux engrène un seul pignon fou 86 porté le premier arbre secondaire 50 pour constituer le rapport de deuxième. Le rapport de marche arrière a son propre pignon fou 87, porté par le second arbre secondaire 60, qui engrène avec le pignon fou 86a lié au pignon fou 86 de seconde, qui fait office de pignon intermédiaire de marche arrière.

L'ensemble des six rapports avant et le rapport de marche arrière sont ainsi obtenus avec trois pignons fixes 21, 22 et 23 sur le premier arbre primaire plein 20 pour obtenir les rapports impairs et avec deux pignons fixes 31 et 32 sur le second arbre primaire creux 30 pour obtenir les rapports pairs.

En outre, tous les pignons fous peuvent être sélectivement liés aux arbres secondaires qui les portent par des dispositifs de crabotage simple ou double. Les pignons fous 81, 83, 84 et 86 peuvent ainsi être liés sélectivement à l'arbre secondaire 50 qui les porte, et les pignons fous 82, 85 et 87 peuvent être sélectivement liés à l'arbre secondaire 60 qui les porte.

Un premier dispositif de crabotage double 100 permet de lier sélectivement en rotation à l'arbre secondaire 50 le pignon fou 81 pour obtenir le rapport de troisième ou le pignon fou 83 pour obtenir le rapport de cinquième. Un second dispositif de crabotage double 101 permet de lier en rotation à l'arbre secondaire 50 les pignons fous 84 et 86 pour obtenir les rapports de sixième et de deuxième, Un troisième dispositif de crabotage simple 102 permet de lier sélectivement en rotation à l'arbre secondaire 60 le pignon fou 82 pour obtenir le rapport de première. Enfin, un dispositif de crabotage double 103 permet de lier sélectivement en rotation à l'arbre secondaire 60 le pignon fou 87 pour obtenir le rapport de quatrième, ou le pignon fou 87 pour obtenir le rapport de marche arrière.

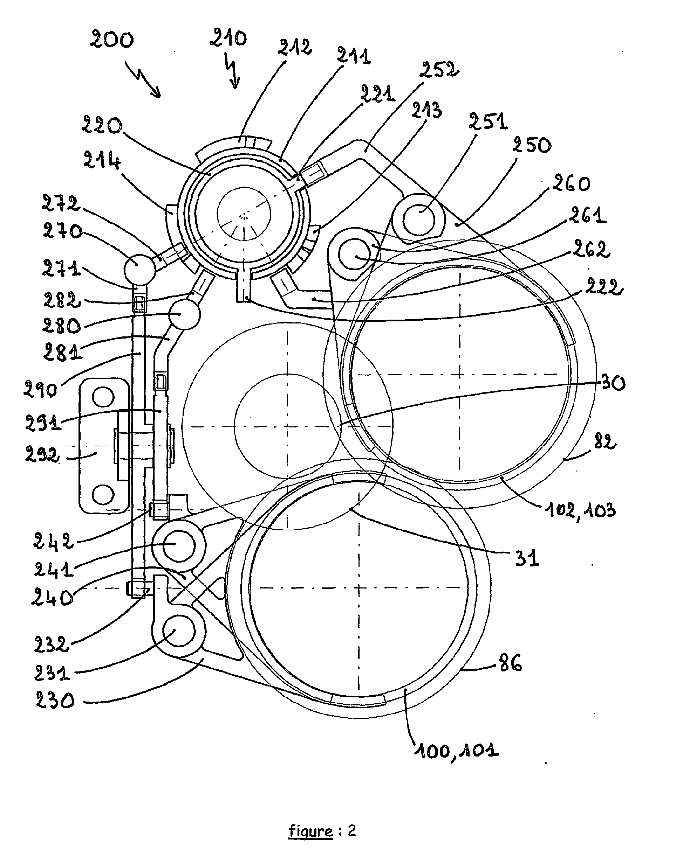

La figure 2 représente la structure d'ensemble du dispositif de commande interne 200 réalisé conformément à l'invention.

Ce dispositif comporte un sélecteur unique 210 dont l'axe de rotation est parallèle aux axes des arbres primaires 20, 30 et des arbres secondaires 50,60, peut tourner par rapport à son axe. Il est composé d'un barillet de sélection cylindrique 211, fixe axialement par rapport à ce même axe, portant trois secteurs périphériques 212, 213 et 214 de plus grand diamètre, et d'un chariot de passage 220, également de forme cylindrique, concentrique au barillet 211 et placé à l'intérieur de ce dernier, entraîné en rotation par le barillet par l'intermédiaire des doigts 221 et 222, et pouvant se déplacer axialement. Selon sa position angulaire, le barillet 211 place ou non les doigts 221 et 222 en vis à vis des crabots des axes de fourchette avec lesquels ils coopèrent.

Le dispositif prévu pour la commande des groupes de crabotage comprend une première fourchette 230 de commande du groupe de crabotage 100 des rapports de troisième et de cinquième, portée par un axe 231 coulissant par rapport à ses paliers dans le carter (non représenté), possédant un pion d'entraînement 232, une deuxième fourchette 240 de commande du groupe de crabotage 101 des rapport de sixième et de deuxième, portée par un axe 241, possédant un pion d'entraînement 242, une troisième fourchette 250 de commande du groupe de crabotage 102 du rapport de première, portée par un axe 251, possédant un crabot d'entraînement 252, et une quatrième fourchette 260 de commande du groupe de crabotage 103 des rapports de quatrième et de marche arrière, portée par un axe 261, possédant un crabot d'entraînement 262.

Deux basculeurs 290 et 291 portés par un unique support 292 transfèrent les mouvements axiaux des axes relais 270 et 280 vers les fourchettes 230 et 240 situées en partie basse de la boîte. L'axe 270 porte deux crabots 271 et 272 qui coopèrent respectivement avec le basculeur 290 et le doigt 222 du chariot 220 d'engagement des rapports, l'axe 280 porte également deux crabots 281 et 282 qui coopèrent respectivement avec le basculeur 291 et le doigt 222.

Le positionnement des axes de fourchette de commande des embrayages et le passage des branches des fourchettes sont déterminés par les pignons ou les éléments tournants les plus encombrants sur chacun des arbres. Les axes 231,241 sont placés en fonction de l'encombrement du pignon de deuxième 86 sur l'arbre secondaire 50 et du pignon fixe 31 de troisième et de cinquième sur l'arbre primaire creux 30. Les axes 251, 261 sont disposés en fonction de l'encombrement du pignon 82 de première sur l'arbre secondaire 60 et en fonction de l'encombrement du pignon fixe 31 de troisième et de cinquième sur l'arbre primaire creux 30. Enfin, les branches sont agencées en fonction de l'encombrement de l'arbre creux 30.

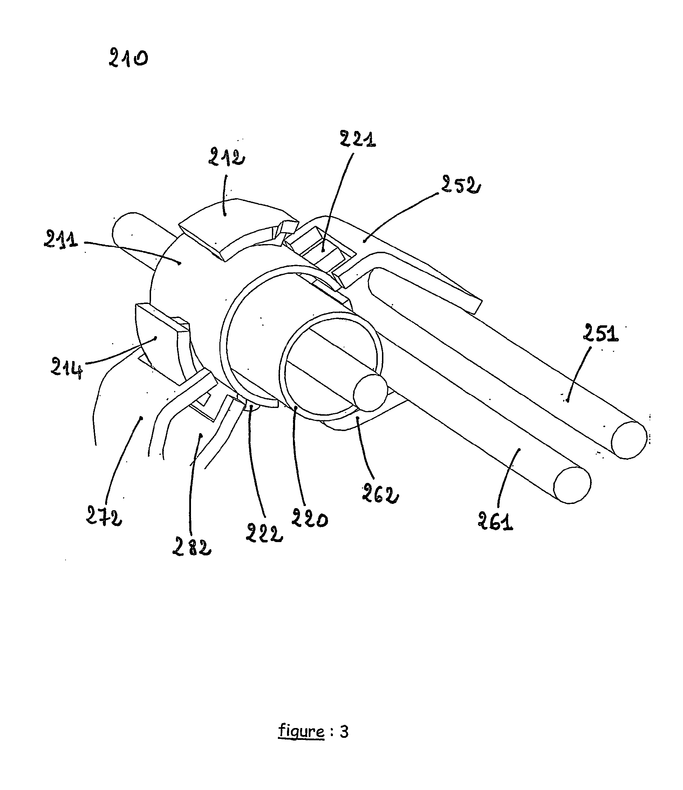

Sur la figure 3, représentant en perpective le sélecteur, on voit le barillet 211, le chariot 220, deux axes de fourchette 251, 251, et les crabots 252, 262, 272, 282 d'entraînement des axes de fourchettes entourant le barillet.

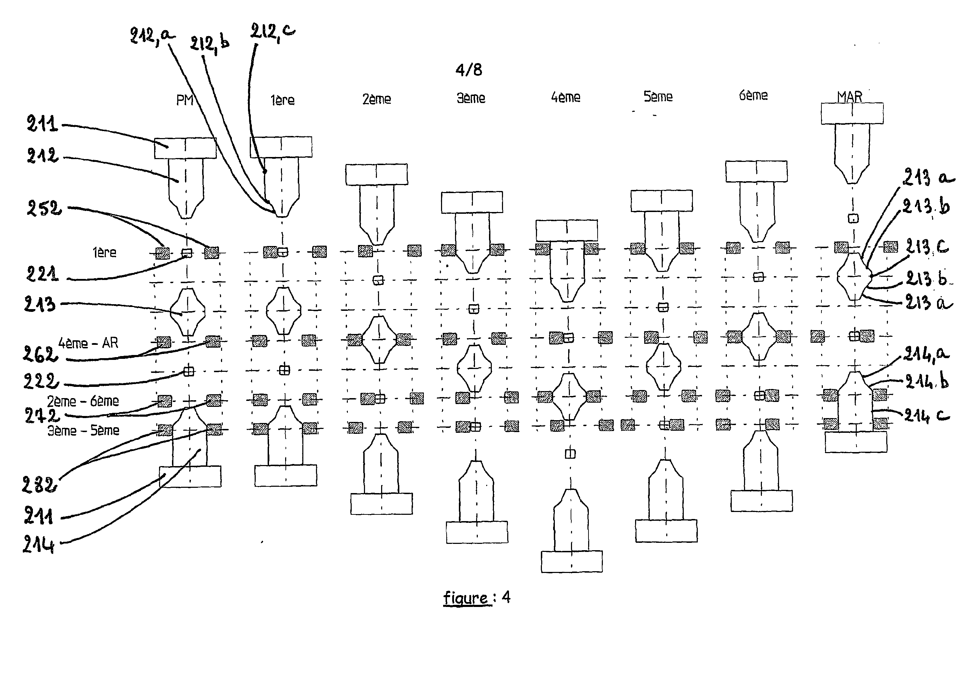

La figure 4 montre partiellement les doigts, les zones périphériques du sélecteur et les crabots des fourchettes en représentation à plat dans les différentes situations de point mort ou neutre, des six rapports avant et de marche arrière. Sur cette figure, on voit le barillet 211 et ses trois secteurs périphériques 212, 213 et 214, les doigts 221 et 222 solidaires en rotation et translation du chariot (non représenté), ainsi que les crabots d'actionnement respectifs 252, 262, 272, 282, des fourchettes du rapport de première, des rapports de quatrième et de marche arrière, des rapports de deuxième et de sixième, et des rapports de troisième et de cinquième.

Dans cette représentation à plat, le barillet 211 n'effectue que des déplacements en translation, correspondant à son déplacement réel en rotation. On voit qu'il réalise le désengagement et le verrouillage du rapport de même parité que le rapport sélectionné pour un engagement, et autorise le maintien en position engagée d'un rapport de parité différente.

Le secteur périphérique 212 possède une première zone 212a, à flancs faiblement inclinés par rapport à l'axe de symétrie du secteur 212, une deuxième zone 212b à flancs plus fortement inclinés, et une troisième zone à flancs parallèles 212c orientés transversalement à l'axe de rotation du barillet.

Lors de la translation du barillet de sa position deuxième sélectionnée à troisième sélectionnée, le secteur périphérique 212 coopère avec le crabot 252 d'engagement du rapport de première. La zone 212a amorce le retour du crabot 252 de sa position rapport engagée, la zone 212b achève le retour du crabot 252 à sa position neutre et enfin la zone 212c verrouille le crabot dans sa position point mort.

Le secteur périphérique central 213 possède à chacune de ses deux extrémités une première zone 213a à flancs faiblement inclinés par rapport à l'axe de symétrie du secteur 213 suivie d'une deuxième zone 213b à flancs plus fortement inclinés, et une zone 213c à flancs parallèles et en partie centrale. Lors de la translation du barillet de sa position troisième sélectionnée à quatrième sélectionnée, les zones 213a et 213b coopèrent avec le crabot 272 de deuxième sixième et assurent le désengagement du rapport de deuxième puis son verrouillage au point mort. Lors du déplacement du barillet de sa position cinquième sélectionnée à sixième sélectionnée, les zones 213a et 213b coopèrent avec le crabot 262 de quatrième marche arrière et réalisent le désengagement du rapport de quatrième puis le verrouillage au point mort des rapports de quatrième et de marche arrière.

Enfin, lors de la translation du barillet de sa position première sélectionnée à deuxième sélectionnée, dans le cas où la marche arrière est engagée, les zones 213a et 213b coopèrent avec le crabot 262 de quatrième marche arrière et réalisent le désengagement du rapport de marche arrière puis le verrouillage au point mort des rapports de quatrième et de marche arrière;

Comme le secteur 212, le secteur périphérique 214 possède une première zone 214a à flancs faiblement inclinés par rapport à son axe de symétrie, une deuxième zone 214b à flancs plus fortement inclinés, et une troisième zone 214c à flancs parallèles orientés transversalement à l'axe de rotation du barillet

Dans le cas où la troisième ou la cinquième sont engagées, le secteur périphérique 214 coopère avec le crabot 282 lors de la translation du barillet de sa position deuxième sélectionnée à première sélectionnée. La zone 214a amorce le retour du crabot 282 de sa position rapport engagée, la zone 214b achève le retour du crabot 282 à sa position neutre et enfin la zone 214c verrouille au point mort les rapports de troisième et de cinquième au point mort.

Dans le cas où la deuxième ou la sixième sont engagées, le secteur périphérique 214 coopère avec le crabot 272 lors de la translation du barillet de sa position première sélectionnée à marche arrière sélectionnée. La zone 214a amorce le retour du crabot 272 de sa position rapport engagée, la zone 214b achève le retour du crabot 272 à sa position neutre. Enfin la zone 214c verrouille au point mort les rapports de deuxième, de sixième, de troisième et de cinquième.

De façon analogue, dans toutes les situations de passages montants ou descendants consécutifs ou avec saut de rapports, la condition d'interdiction d'engagement est toujours respectée. En effet, le barillet rempli son rôle de désengagement et de verrouillage au point mort des rapports de même parité.

Selon une variante non illustrée par les figures, les secteurs périphériques 212, 213, 214 peuvent ne présenter que deux zones angulaires distinctes Les secteurs périphériques au barillet de sélection, à savoir une première zone angulaire à flancs non parallèles à inclinaison évolutive par rapport à l'axe de rotation du barillet qui coopèrent avec des crabots pour amorcer et achever le déplacement axial de ceux-ci d'une position de rapport engagé vers une position neutre dite de point mort, et une zone angulaire à flancs parallèles qui coopèrent avec les crabots pour verrouiller en position point mort les axes des fourchettes d' engagement des rapports.

En se reportant à la figure 4, on voit que la distance entre les deux faces de chaque crabot 252, 262, 272, 282 est nettement supérieure à l'épaisseur des doigts 221, 222. Grâce à cette disposition, chaque doigt peut être en position neutre ou de rapport engagé, aussi bien lorsque le crabot où il est introduit est effectivement en position de rapport engagé que lorsque ce crabot n'engage aucun rapport.

Les doigts 221, 222, peuvent ainsi revenir en positon neutre sans désengager de rapport. Lors d'un déplacement de sélection transversal aux crabots, ils peuvent s'engager dans l'un quelconque des crabots avec lesquels ils doivent coopérer quelque soit la position du crabot, neutre ou rapport engagé.

Sur figure 4, on voit par exemple que le doigt 222 est en position neutre dans le crabot 272 de sixième-deuxième en position rapport de sixième engagé, et qu'il a la possibilité de se déplacer, puisqu'en cinquième il est en position neutre dans le crabot de 282 de troisième cinquième lui même en position de cinquième engagée.

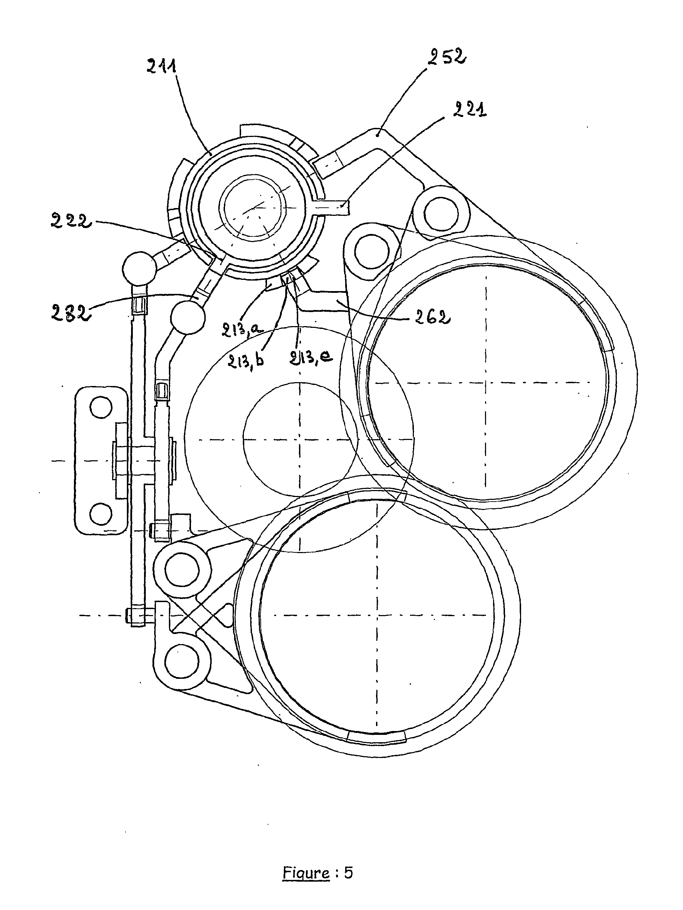

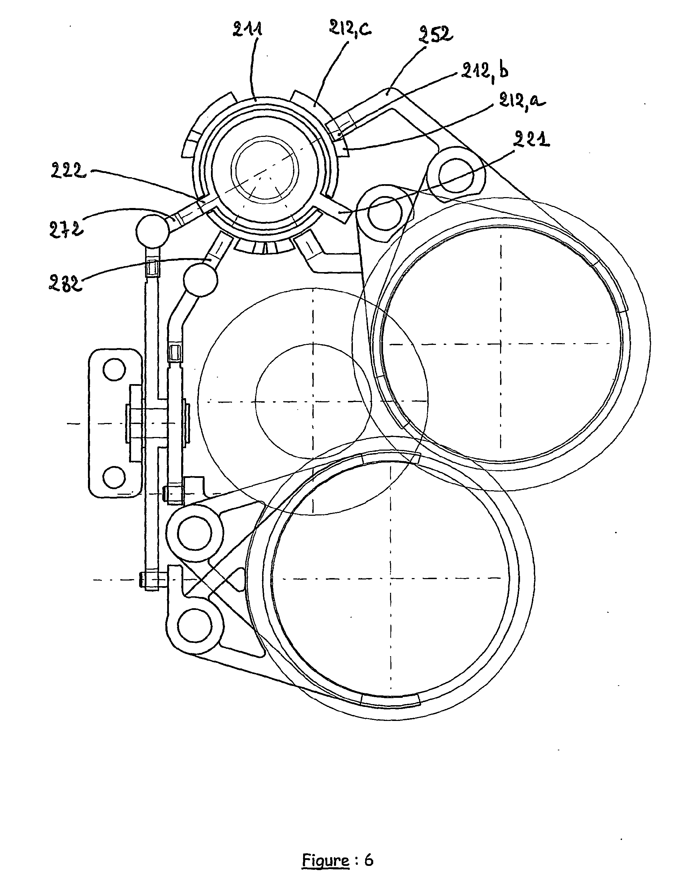

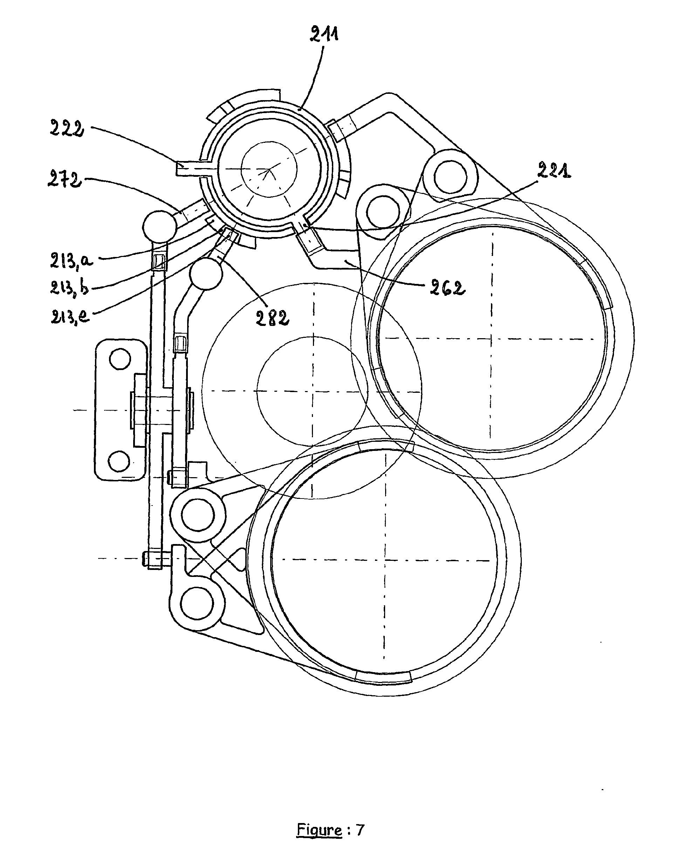

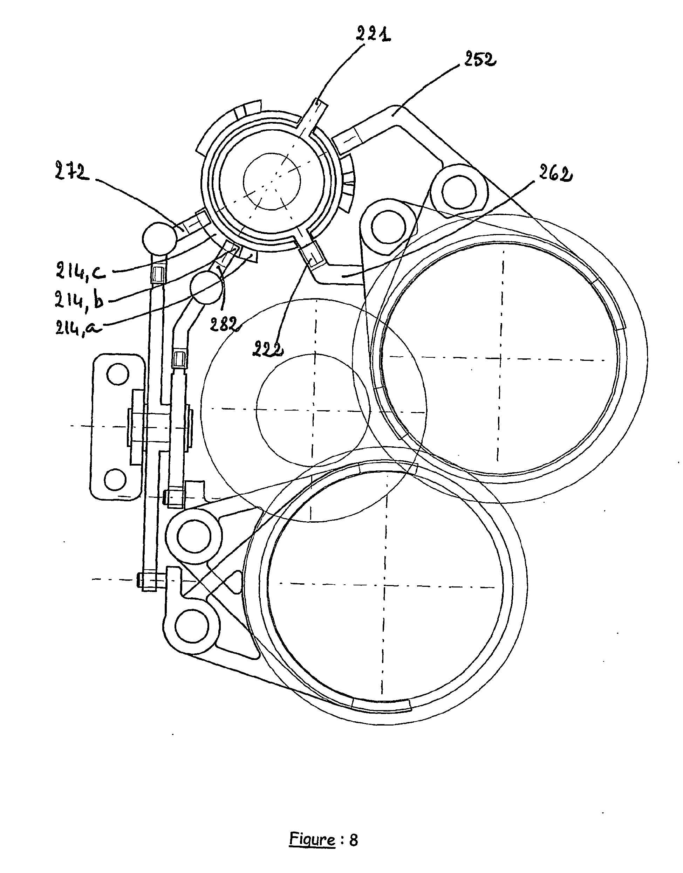

Les figures 5 à 8 représentent l'ensemble du dispositif de commande interne proposé dans les différentes positions de sélection. Ainsi, la figure 5 représente l'ensemble du dispositif de commande interne proposé en position de sélection des rapports de deuxième et de sixième. La figure 6 représente l'ensemble du dispositif de commande interne proposé en position de sélection des rapports de troisième et de cinquième. La figure 7 représente l'ensemble du dispositif de commande interne proposé en position de sélection du rapport de quatrième. La figure 8 représente l'ensemble du dispositif de commande interne proposé en position de sélection du rapport de marche arrière.

Conformément à l'invention, ces figures montrent que les sélections de lignes sont obtenues par des rotations du barillet d'angle de valeur constante et que la sélection de deux rapports consécutifs est toujours réalisée pour cet angle de rotation.

En comparant les figures 2 et 5, on voit que par une première rotation angulaire dans le sens des aiguilles d'une montre, le doigt 221 initialement en position neutre et face au crabot de première 252 (figure 2) en position vitesse engagée atteint la zone inter-crabots de première et de quatrième. Simultanément, le secteur périphérique central 213 du barillet 211 désengage éventuellement le rapport de marche arrière par l'action des flancs inclinés 213a et 213b sur le crabot de fourchette de quatrième marche arrière 262. Les flancs parallèles 213c verrouillent le crabot, et le doigt 222 quitte la zone inter-crabots de quatrième et de deuxième et s'oriente face au crabot de deuxième 282. Par un déplacement axial, il entraîne ensuite le crabot, engage le rapport de deuxième et revient en position neutre. Les rapports de première et de deuxième sont tous les deux engagés, et l'actionnement simultané des deux embrayages permet d'obtenir un passage du rapport de première au rapport de deuxième sous couple.

En se reportant aux figures 5 et 6, on voit que par une deuxième rotation angulaire, de même valeur et dans le même sens, le doigt 221 reste dans la zone inter-crabots de première et de quatrième. Simultanément, le premier secteur périphérique 212 du barillet 211 désengage le rapport de première par l'action des flancs inclinés 212a et 212b sur le crabot de fourchette de première 252. Les flancs parallèles 212c verrouillent le crabot. Le doigt 222 quitte le crabot de deuxième 282, s'oriente face au crabot de troisième 272, engage le rapport de troisième, et revient en position neutre. Les rapports de deuxième et dé troisième sont tous les deux engagés. L'actionnement simultané des deux embrayages permet donc d'obtenir un passage sous couple de deuxième en troisième.

En comparant les figures 6 et 7, on voit que par une troisième rotation angulaire de même valeur et dans le même sens, le doigt 221 quitte la zone inter-crabots de première et de quatrième pour s'orienter face au crabot 262 de quatrième-marche arrière. Simultanément, le secteur périphérique central 213 du barillet 211 désengage le rapport de deuxième par l'action des flancs inclinés 213a et 213b sur le crabot de fourchette 282 de deuxième et sixième. Les flancs parallèles 213c verrouillent le crabot, le doigt 222 quitte le crabot 272 de troisième cinquième et s'oriente dans une position angulaire inactive. Le doigt 221 engage le rapport de quatrième et revient en position neutre. Les rapports de troisième et de quatrième sont tous les deux engagés et les seuls engagés, et l'actionnement simultané des deux embrayages permet ainsi d'obtenir un passage sous couple de troisième en quatrième.

De la position de la figure 7, si l'on effectue une première rotation angulaire, de même valeur et dans le sens inverse des aiguilles d'une montre, on engage la cinquième, et par une deuxième rotation angulaire de même valeur dans le sens inverse des aiguilles d'une montre on passe en sixième.

Enfin, en comparant les figures 2 et 8, on voit que par une rotation angulaire de même valeur dans le sens inverse des aiguilles d'une montre, le doigt 221 initialement en position neutre et face au crabot 252 de première en position neutre ou engagée, s'oriente dans une zone angulaire inactive. Simultanément, le secteur périphérique central 214 du barillet 211 désengage éventuellement le rapport de deuxième par l'action des flancs inclinés 214a et 214b sur le crabot de fourchette 282 de deuxième et sixième. Les flancs parallèles 214, verrouillent les crabots 272 et 282, le doigt 222 quitte la zone inter-crabots de deuxième et de marche arrière et s'oriente face au crabot 262 de marche arrière. Par un déplacement axial, il entraîne le crabot, engage le rapport de marche arrière et revient en position neutre. Dans un premier cas, seul le rapport de marche arrière est engagé. Dans un deuxième cas, les rapports de marche arrière et de première sont tous les deux engagés, et l'actionnement simultané des deux embrayages nous permet d'obtenir un passage alterné dynamique de la marche arrière à la première et inversement.

Grâce à l'invention, l'engagement des rapports peut être obtenu de la manière suivante.

Par une première rotation angulaire dans le sens des aiguilles d'une montre, le premier doigt 221, initialement en position neutre et face au crabot de première 252 en position vitesse engagée, atteint la zone inter-crabots de première et de quatrième pendant que simultanément, le deuxième doigt 222 quitte la zone inter-crabots de quatrième et de deuxième s'oriente face au crabot de deuxième 272. Par un déplacement axial, il entraîne ce crabot, engage le rapport de deuxième et revient en position neutre. Les rapports de première et de deuxième sont tous les deux engagés, et l'actionnement simultané des deux embrayages permet d'obtenir un passage sous couple de première en deuxième.

Par une deuxième rotation angulaire dans le même sens, le premier doigt 221 reste dans la zone inter-crabots de première et de quatrième. Simultanément, le premier secteur 212 périphérique du barillet, par l'action des flancs inclinés sur le crabot 252 de fourchette de première, désengage le rapport de première et le deuxième doigt 222 quitte le crabot de deuxième 272 s'oriente face au crabot de troisième 282, engage le rapport de troisième et revient en position neutre. Les rapports de deuxième et de troisième sont tous les deux engagés, et l'actionnement simultané des deux embrayages permet d'obtenir un passage sous couple de deuxième en troisième.

Par une troisième rotation angulaire dans le même sens, le premier doigt 221 quitte la zone inter-crabots de première et de quatrième pour s'orienter face au crabot de quatrième marche arrière 262. Simultanément, le secteur périphérique central 213 du barillet désengage le rapport de deuxième par l'action des flancs inclinés sur le crabot de fourchette de deuxième et sixième 272. Le deuxième doigt quitte le crabot de troisième cinquième, et s'oriente dans une position angulaire inactive. Le premier doigt 221 engage le rapport de quatrième et revient en position neutre. Les rapports de troisième et de quatrième sont tous les deux engagés et les seuls engagés, et l'actionnement simultané des deux embrayages permet d'obtenir un passage sous couple de troisième en quatrième.

De cette position, le deuxième doigt 222 revient de sa position angulaire inactive face au crabot des rapports de troisième cinquième 282 en effectuant une première rotation angulaire dans le sens opposé des aiguilles d'une montre. Le premier doigt 221 s'oriente dans la zone inter-crabots de première et de quatrième. Le déplacement axial du deuxième doigt 222 désengage le rapport de troisième et engage le rapport de cinquième. Les rapports de quatrième et de cinquième sont tous les deux engagés et les seuls engagés, et l'actionnement simultané des deux embrayages permet ainsi d'obtenir un passage sous couple de quatrième en cinquième.

Par une deuxième rotation angulaire dans le sens opposé des aiguilles d'une montre, le deuxième doigt 222 quitte sa position angulaire face au crabot des rapports de troisième cinquième 282 pour se mettre angulairement face au crabot de sixième deuxième 272. Simultanément le secteur périphérique central 213 du barillet, désengage le rapport de quatrième , par l'action des flancs inclinés sur le crabot de fourchette de quatrième marche arrière, et le premier doigt est toujours orienté dans la zone inter-crabots de première et de quatrième. Le déplacement axial du deuxième doigt 222 engage le rapport de sixième. Les rapports de cinquième et de sixième sont tous les deux engagés et les seuls engagés. L'actionnement simultané des deux embrayages permet ainsi d'obtenir un passage sous couple de cinquième en sixième.

Enfin, par une rotation angulaire, dans le sens inverse des aiguilles d'une montre, le premier doigt 221, initialement en position neutre et face au crabot de première 252 en position neutre ou engagée, s'oriente dans une zone angulaire inactive. Simultanément, le deuxième doigt 222 quitte la zone inter-crabots de deuxième et de marche arrière et s'oriente face au crabot de marche arrière, puis, par un déplacement axial, entraîne ce crabot, engage le rapport de marche arrière et revient en position neutre. Le secteur périphérique 214 du barillet 211 verrouille les crabots 272, 282 des fourchettes de seconde sixième et troisième cinquième. Dans un premier cas, seul le rapport de marche arrière est engagé, dans un deuxième cas les rapports de marche arrière et de première sont tous les deux engagés. L'actionnement simultané des deux embrayages permet ainsi d'obtenir un passage alterné dynamique de la marche arrière à la première et inversement.

De façon analogue, l'invention permet d'effectuer l'ensemble des passages descendants du rapport de sixième au rapport de première, ainsi que des sauts de rapports sous couple ou avec rupture de couple.

## Revendications

1. Dispositif de commande interne de boîte de vitesses mécanique munie d'un premier et d'un second embrayage d'entrée (40, 41) contrôlant respectivement la transmission du couple moteur vers un premier et un second arbre primaire concentriques (20, 30) portant des pignons fixes (21, 22, 23, 31, 32), de deux arbres secondaires (50, 60) portant des pignons fous entraînés respectivement par le premier et par le second arbre primaire et de moyens de crabotage (100, 101, 102 103) des pignons fous actionnés par un ensemble de fourchettes (230, 240, 250, 260), **caractérisé en ce que** la sélection et le passage de tous les rapports de la boîte sont assurés par un sélecteur commun (210) composé d'un barillet de sélection (211) et d'un chariot de passage (220) concentrique au barillet et disposé à l'intérieur de celui-ci.

2. Dispositif de commande selon la revendication 1, **caractérisé en ce que** le barillet (211) est fixe axialement et mobile en rotation.

3. Dispositif de commande selon la revendication 1 ou 2, **caractérisé en ce que** barillet (211) entraîne le chariot (220) en rotation.

4. Dispositif de commande selon la revendication 1, 2 ou 3, **caractérisé en ce que** le chariot présente des doigts (221, 222) déplaçant les axes (231, 241, 251, 261) des fourchettes (230, 240, 250, 260) pour engager les rapports.

5. Dispositif de commande selon l'une des revendications précédentes, **caractérisé en ce que** le barillet présente au moins trois secteurs périphériques (212, 213, 214) de plus grand diamètre coopérant avec des crabots (252, 262, 272, 282) d'entraînement des axes de fourchettes (231, 241, 251, 261).

6. Dispositif de commande selon la revendication 5, **caractérisé en ce que** les secteurs périphériques (212, 213, 214) du barillet (211) présentent trois zones d'inclinaison angulaire différentes (212a, 213a, 214a ; 212b, 213b, 214b ; 212c, 212b, 212c) par rapport à l'axe de rotation du barillet (211), coopérant avec les crabots (252, 262, 272, 282) respectivement pour amorcer un déplacement axial de ceux-ci d'une position de rapport engagé vers une position neutre, pour achever ce déplacement, et pour verrouiller en position neutre les axes de fourchettes (231, 241, 251, 261.

7. Dispositif de commande interne selon la revendication 5 **caractérisé en ce que** les secteurs périphériques (212 ,213, 214) du barillet de sélection (211), ont à leurs extrémités une première zone angulaire à flancs non parallèles à pente évolutive qui coopèrent avec les crabots de fourchette (252, 262, 272, 282) pour amorcer et achever un déplacement axial de ceux-ci d'une position de rapport engagé vers une position neutre dite de point mort et une zone angulaire (212c , 213c et 214c) à flancs parallèles qui coopèrent avec les crabots pour verrouiller en position les axes des fourchettes d'engagement des rapports.

8. Dispositif de commande selon la revendication 6 ou 7, **caractérisé en ce que** les zones de verrouillage (212c, 213c, 214c) des secteurs périphériques (212, 213, 214) sont orientées transversalement à l'axe de rotation du barillet (211).

9. Dispositif de commande selon la revendication 8, **caractérisé en ce qu'**il comporte un secteur périphérique central (213) coopérant avec deux crabots.

10. Dispositif de commande selon la revendication 9, **caractérisé en ce que** le secteur périphérique central (213) possède des zones à flancs inclinés à ses deux extrémités, alors que les autres secteurs n'ont des zones à flancs inclinés qu'à leur extrémité faisant face au secteur central.

11. Dispositif de commande selon l'une quelconque des revendications précédentes, **caractérisé en ce que** l'engagement et le désengagements de tous les rapports s'effectue par simple rotation du rotation du barillet (211).

12. Dispositif de commande selon l'une quelconque des revendications précédentes, **caractérisé en ce que** le barillet (211) autorise l'engagement simultané de deux rapports de parité différente.

13. Dispositif de commande selon l'une quelconque des revendications précédentes, **caractérisé en ce que** le barillet (211) désengage le rapport de même parité que celui en cours de sélection.

## Claims

1. Internal control device for a mechanical gearbox provided with a first and a second input clutch (40, 41) respectively controlling transmission of the driving torque to a first and a second primary shaft (20, 30), said shafts being concentric and bearing fixed pinions (21, 22, 23, 31, 32), with two secondary shafts (50, 60) bearing idler pinions driven respectively by the first and by the second primary shaft and with dog clutching means (100, 101, 102, 103) for the idler pinions actuated by a set of forks (230, 240, 250, 260), **characterized in that** selection and changing of all the gearbox gears are ensured by a common selector (210) composed of a selection barrel (211) and a changing carriage (220) concentric with the barrel and disposed therein.

2. Control device according to Claim 1, **characterized in that** the barrel (211) is fixed axially and is rotationally mobile.

3. Control device according to Claim 1 or 2, **characterized in that** the barrel (211) drives the carriage (220) rotationally.

4. Control device according to Claim 1, 2 or 3, **characterized in that** the carriage has fingers (221, 222) moving the shafts (231, 241, 251, 261) of the forks (230, 240, 250, 260) so as to engage the gears.

5. Control device according to one of the preceding claims, **characterized in that** the barrel has at least three peripheral larger diameter sectors (212, 213, 214) cooperating with dogs (252, 262, 272, 282) driving the shafts of the forks (231, 241, 251, 261).

6. Control device according to Claim 5, **characterized in that** the peripheral sectors (212, 213, 214) of the barrel (211) have three zones of different angular inclination (212a, 213a, 214a; 212b, 213b, 214b; 212c, 212b, 212c) relative to the axis of rotation of the barrel (211), cooperating with the dogs (252, 262, 272, 282) respectively for initiating axial displacement thereof from an engaged gear position towards a neutral position, for completing this displacement, and for locking in neutral position the fork shafts (231, 241, 251, 261).

7. Internal control device according to Claim 5, **characterized in that** the peripheral sectors (212, 213, 214) of the selection barrel (211) have at their ends a first angular zone with non-parallel flanks of progressive gradient which cooperate with the fork dogs (252, 262, 272, 282) to initiate and complete axial displacement thereof from an engaged gear position towards a neutral position known as neutral and an angular zone (212c, 213c and 214c) with parallel flanks which cooperate with the dogs to lock in position the shafts of the gear engaging forks.

8. Control device according to Claim 6 or 7, **characterized in that** the locking zones (212c, 213c, 214c) of the peripheral sectors (212, 213, 214) are oriented transversely to the axis of rotation of the barrel (211).

9. Control device according to Claim 8, **characterized in that** it comprises a central peripheral sector (213) cooperating with two dogs.

10. Control device according to Claim 9, **characterized in that** the central peripheral sector (213) has zones with inclined flanks at both its ends, whilst the other sectors have zones with inclined flanks only at their end facing the central sector.

11. Control device according to any one of the preceding claims, **characterized in that** engagement and disengagement of all the gears is effected by simple rotation of the barrel (211).

12. Control device according to any one of the preceding claims, **characterized in that** the barrel (211) permits simultaneous engagement of two gears of different parity.

13. Control device according to any one of the preceding claims, **characterized in that** the barrel (211) disengages the gear of the same parity as that being selected.

## Patentansprüche

1. Interne Steuervorrichtung für mechanisches Getriebe, das mit einer ersten und einer zweiten Eingangskupplung (40, 41), die die Übertragung des Motordrehmoments zu einer ersten beziehungsweise zweiten konzentrischen Hauptwelle (20, 30) regeln, die feste Zahnräder (21, 22, 23, 31, 32) tragen, zwei Nebenwellen (50, 60), die Freilaufzahnräder tragen, die durch die erste beziehungsweise die zweite Hauptwelle und Klauenkupplungsmittel (100, 101, 102, 103) der Freilaufzahnräder angetrieben werden, die durch einen Satz von Gabeln (230, 240, 250, 260) betätigt werden, versehen ist, **dadurch gekennzeichnet, dass** die Auswahl und das Schalten aller Gänge des Getriebes durch einen gemeinsamen Schalthebel (210) sichergestellt werden, der aus einer Schaltwalze (211) und einem Schaltschlitten (220) besteht, der konzentrisch zur Walze ist und in ihrem Inneren angeordnet ist.

2. Steuervorrichtung nach Anspruch 1, **dadurch gekennzeichnet, dass** die Walze (211) axial befestigt und drehbar ist.

3. Steuervorrichtung nach Anspruch 1 oder 2, **dadurch gekennzeichnet, dass** die Walze (211) den Schlitten (220) drehbar antreibt.

4. Steuervorrichtung nach Anspruch 1, 2 oder 3, **dadurch gekennzeichnet, dass** der Schlitten Finger (221, 222) aufweist, die die Achsen (231, 241, 251, 261) der Gabeln (230, 240, 250, 260) verschieben, um die Gänge einzuschalten.

5. Steuervorrichtung nach einem der vorhergehenden Ansprüche, **dadurch gekennzeichnet, dass** die Walze mindestens drei Umfangsabschnitte (212, 213, 214) mit größerem Durchmesser aufweist, die mit den Klauen (252, 262, 272, 282) zum Antreiben der Gabelachsen (231, 241, 251, 261) zusammenwirken.

6. Steuervorrichtung nach Anspruch 5, **dadurch gekennzeichnet, dass** die Umfangsabschnitte (212, 213, 214) der Walze (211) drei Bereiche mit unterschiedlicher Winkelneigung (212a, 213a, 214a; 212b, 213b, 214b; 212c, 212b, 212c) in Bezug auf die Rotationsachse der Walze (211) aufweisen, die mit den Klauen (252, 262, 272, 282) jeweils zusammenwirken, um eine axiale Verschiebung davon von einer eingeschalteten Gangstellung zu einer neutralen Stellung in Gang zu setzen, um diese Verschiebung zu vollenden und um die Gabelachsen (231, 241, 251, 261) in der neutralen Stellung zu sperren.

7. Interne Steuervorrichtung nach Anspruch 5, **dadurch gekennzeichnet, dass** die Umfangsabschnitte (212, 213, 214) der Schaltwalze (211) an ihren Enden einen ersten Winkelbereich mit nicht parallelen Flanken mit steigender Neigung, die mit den Gabelklauen (252, 262, 272, 282) zusammenwirken, um eine axiale Verschiebung davon von einer eingeschalteten Gangstellung zu einer neutralen Stellung, die Leerlaufstellung genannt wird, in Gang zu setzen und zu vollenden, und einen Winkelbereich (212c, 213c und 214c) mit parallelen Flanken haben, die mit den Klauen zusammenwirken, um die Achsen der Gabeln zum Einschalten der Gänge in ihrer Stellung zu sperren.

8. Steuervorrichtung nach Anspruch 6 oder 7, **dadurch gekennzeichnet, dass** die Sperrbereiche (212c, 213c, 214c) der Umfangsabschnitte (212, 213, 214) quer zur Rotationsachse der Walze (211) ausgerichtet sind.

9. Steuervorrichtung nach Anspruch 8, **dadurch gekennzeichnet, dass** sie einen zentralen Umfangsabschnitt (213) aufweist, der mit zwei Klauen zusammenwirkt.

10. Steuervorrichtung nach Anspruch 9, **dadurch gekennzeichnet, dass** der zentrale Umfangsabschnitt (213) Bereiche mit an seinen zwei Enden geneigten Flanken aufweist, während die anderen Bereiche nur an ihren Enden, die dem zentralen Abschnitt gegenüberliegen, Bereiche mit geneigten Flanken haben.

11. Steuervorrichtung nach einem der vorhergehenden Ansprüche, **dadurch gekennzeichnet, dass** das Einschalten und Ausschalten aller Gänge durch einfache Rotation der Walze (211) bewerkstelligt wird.

12. Steuervorrichtung nach einem der vorhergehenden Ansprüche, **dadurch gekennzeichnet, dass** die Walze (211) das gleichzeitige Einschalten von zwei Gängen mit unterschiedlicher Parität erlaubt.

13. Steuervorrichtung nach einem der vorhergehenden Ansprüche, **dadurch gekennzeichnet, dass** die Walze (211) den Gang mit der gleichen Parität wie der des Ausgewählten ausschaltet.
